# EUROPEAN PATENT SPECIFICATION

(11) **EP 3 808 500 B1**
(45) Date of publication and mention of the grant of the patent: **06.12.2023**
(21) Application number: 20197637.0
(22) Date of filing: 23.09.2020
(51) Int. Cl.: B23Q 1/48, B23Q 11/08

(54) **CHIPS SHIELDING DEVICE FOR A WORKING ASSEMBLY AND WORKING MACHINE COMPRISING THE DEVICE**
SPÄNE-SCHUTZVORRICHTUNG FÜR EINE BEARBEITUNGSVORRICHTUNG UND BEARBEITUNGSVORRICHTUNG MIT DER SPÄNE-SCHUTZVORRICHTUNG
CAPOT DE PROTECTION DE COPEAUX POUR UN DISPOSITIF D'USINAGE ET DISPOSITIF D'USINAGE COMPRENANT LE CAPOT DE PROTECTION

(30) Priority: 15.10.2019 IT 201900018800
(43) Date of publication of application: 21.04.2021
(73) Proprietor: SCM Group S.p.A., 47921 Rimini (RN) (IT)
(72) Inventor: BIANCHI, Fabio, 47921 Rimini (RN) (IT)
(74) Representative: Tiburzi, Andrea

(56) References cited:
- EP-A1- 1 674 199
- EP-A1- 1 704 959
- EP-A2- 2 868 431
- CN-A- 108 465 833
- DE-U1-202015 003 373
- GB-A- 629 280
- JP-A- 2016 083 724
- US-A- 3 820 288
- US-B1- 6 247 880

## Description

The present invention relates to a chips shielding device for a working assembly, in particular for the interception of chips following the machining of wooden pieces by a working assembly.

The present invention also comprises a machine for working pieces made of wood, glass, fiberglass, ceramic, plastic, and the like, comprising a machining unit, provided with a chips shielding device.

More specifically, the invention relates to a device of the above type, designed and manufactured in particular to intercept and convey the chips produced by the tool of a working assembly, during the machining, such as cutting or milling and the like, of a piece to be worked, in particular made of wood, but which can be used for any workpiece, which requires the removal of processing residues.

In the following the description will be directed to a chips shielding device for a working assembly with fixed and/or mobile spindle vertical axis, such as anthropomorphic heads, in particular for the machining of fixtures, but it is clear that the same should not be considered limited to this specific use.

As is currently well known, in fixed and mobile vertical spindle axis large machining units working assemblies, such as anthropomorphic heads, the action of the tool on the workpiece causes the production of dust and chips, which, if not intercepted and conveyed, are dispersed into the environment, causing an increase in the environmental pollution, and also causing possible injuries to the operators in charge of controlling the working assembly, due to an accidental impact between the chips and the operator.

To solve these drawbacks, in machining units with very high rotation speeds of the tools, protection is provided that surrounds the tool from above, avoiding the direct dispersion of the chips towards the outside, a chip conveyor or deflector suitable for intercepting the chips ejected by said tool, and one or more aspirators that capture the chips inside the protection, directing the chips towards a collection container.

The conveyors or deflectors of the known devices have a determined concavity, configured to intercept the chips, and to convey them to the suction member.

Furthermore, known deflectors can be both fixed and mobile.

Fixed deflectors have the drawback of remaining in a predetermined position and, therefore, of being able to intercept only the chips which are ejected according to specific directions.

The mobile deflectors, while following the tool during machining, nevertheless intercept the chips only when the tool rotates in a predetermined direction, while they are unable to intercept the chips when the tool rotates in an opposite direction, as the concavity of the deflector is facing in an unfavorable position with respect to the ejection direction of the chips.

Therefore, it is evident that a significant part of the chips produced by the tool during processing escapes the action of the aspirators, thus falling into the environment, which the assembly is located in, or sometimes accidentally hitting an operator.

The relevant prior art also includes patent US 6247880 B1 and patent applications EP 1674199 A1 (on which the preamble of appended claim 1 is based), GB 629280 A, US 3820288 A, CN 108465833 A, JP 2016083724 A, DE 202015003373 U1, EP 2868431 A2, EP 1704959 A1.

In light of the above, it is an object of the present invention to provide a chip shielding device capable of intercepting the chips ejected in any direction.

Another object of the invention is to provide a chip shielding device capable of intercepting the chips generated by machining of the working tool in any rotation direction and/or movement.

A further object of the present invention is to provide a machine for processing pieces made of wood, glass, fiberglass, ceramic, plastic, and the like, comprising a working assembly, provided with a chip shielding device.

Therefore, it is specific object of the present invention a chips shielding device couplable with a tools holder head provided with at least one tool for working wood workpieces and the like, as defined by appended claim 1.

Preferably, said first part and second part are arranged symmetrically to each other with respect to a vertical symmetry plane.

According to the invention, said first part is provided with a concave inner surface facing said tool, and preferably said concave inner surface ends with a curved ramp portion with respect to the remaining portion, said second part is provided with a concave inner surface facing said tool, said concave inner surface ends with a curved ramp portion with respect to the remaining portion, and said curved ramp portions are arranged back to back.

Always according to the invention, said deflector means is positioned corresponding to the working carried out by said tool, so that said concave inner surface of said first part intercepts the chips produced during the working according to said first rotation direction, and so that said concave inner surface of said second part intercepts the chips produced during the working according to said second rotation direction.

Still according to the invention, said deflector means may comprise a first and a second actuator for coupling said circular member with said tools holder head.

Further according to the invention, said first and second actuators cause the translation of said circular member along a vertical axis, from a lowered position, in which said first and second parts surround said tool, to a raised position, in which said first and second parts are raised with respect to said tool.

Preferably according to the invention, said mobile portion is fixed to said tools holder head by fixing means.

Always according to the invention, said first and second parts are coupled with said mobile portion by respective fixing means.

Still according to the invention, said first part is a first deflector mean and said second part is a second deflector mean, separated from one another.

Preferably, said first and second parts move independently from each other.

It is further object of the present invention a working machine for working wooden workpieces comprising a tool holder head provided with at least one tool, characterized in that it comprises a chips shielding device couplable with said tools holder head.

The present invention will be now described, for illustrative but not limitative purposes, according to its preferred embodiments, with particular reference to the figures of the enclosed drawings, wherein:
figure 1 shows a perspective view of the chip shielding device for a working assembly, object of the present invention;
figure 2 shows a front view of the device of figure 1;
figure 3 shows a bottom view of the device of figure 1;
figure 4A shows a schematic view from the bottom in a direction of rotation of the device object of the present invention;
figure 4B shows a schematic view from the bottom in a direction of rotation opposite to that shown in figure 4A;
figure 5 shows a front perspective view of the device object of the present invention, coupled to a machining head with three rotation axes;
figure 6 shows a perspective view of the device object of the present invention, coupled to a machining head with five rotation axes;
figure 7 shows a front view of the device shown in figure 6; and
figure 8 shows a side view of the device shown in figure 6.

In the various figures, similar parts will be indicated by the same reference numbers.

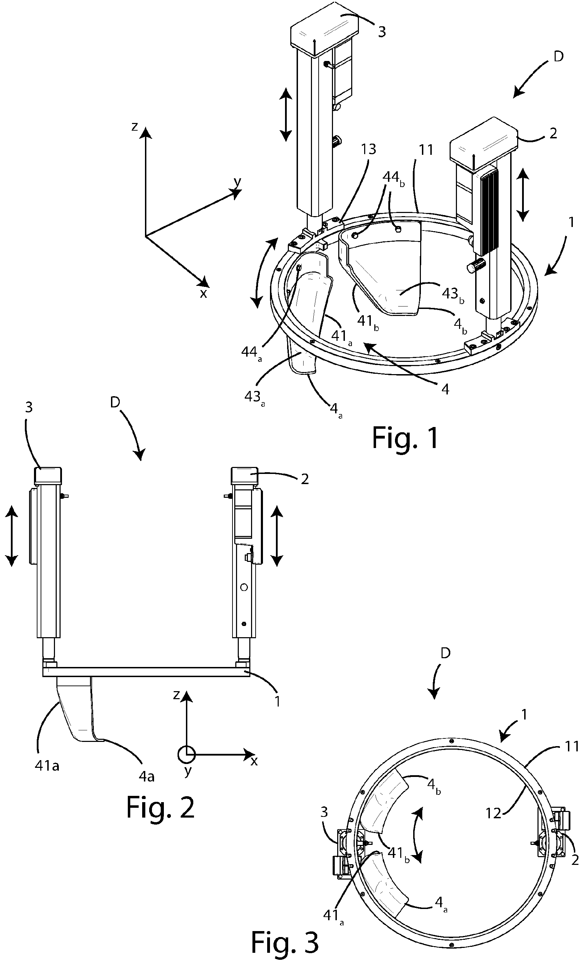

With reference to figures 1-3, the improved chip shielding device D for a working assembly object of the present invention essentially comprises a circular member 1, a first 2, and a second linear actuator 3, coupled to said circular member 1 and a first 4ₐ and a second 4_{b} deflector, coupled to said circular member 1, to contact the chips ejected during machining.

Said device D is coupled to a tool holder head comprising a machining tool U, mounted in a woodworking machine, not shown in the figure.

During machining, said tool U can rotate according to a first direction of rotation A and according to a second direction of rotation B, opposite to said first direction of rotation A.

Said circular member 1 comprises a fixed portion 11 and a movable portion 12 capable of rotating.

Said fixed portion 11 and mobile portion 12 are coupled to each other by means of a guide system, not shown in the figure.

The movement of said movable portion 12 is controlled by a numerically controlled logic, which also controls the operation of the tool U.

A pin 13 is arranged on said movable portion 12, for coupling to said movable portion 12 with the tool holder head, as will be described in detail below.

A deflector means 4 is fixed on said movable portion 12.

Said deflector means comprises a first part or first deflector 4ₐ, and a second part or second deflector 4_{b} by means of respective fixing means 44ₐ, and 44_{b}.

Therefore, said first 4ₐ and second 4_{b} deflectors are able to rotate integrally with said movable portion 12.

Said first deflector 4ₐ is provided with a concave internal surface 43ₐ facing the tool U.

Said concave internal surface 43ₐ ends with a curved portion 41ₐ with respect to the remaining portion.

In this way, the chips are initially intercepted by said concave internal surface 43ₐ, they are conveyed towards said ramp curved portion 41ₐ, which causes them to flow upwards where they are sucked by the suction system.

Similarly, said second deflector 4_{b} is provided with a concave internal surface 43_{b} facing the tool U.

Said concave internal surface 43_{b} ends with a curved portion 41_{b} with respect to the remaining portion.

In this way, the chips are initially intercepted by said concave internal surface 43_{b}, they are conveyed towards said ramp curved portion 41_{b}, which causes them to flow upwards where they are sucked by the suction system.

In particular, said first part 4ₐ and second part 4_{b} are arranged symmetrically to each other with respect to a symmetry vertical plane.

Furthermore, said ramp curved portions 41ₐ and 41_{b} are arranged back-to-back to each other.

Said internal concave surfaces 43ₐ and 43_{b} are concave and shaped so as to contact the chips ejected by the tool during machining.

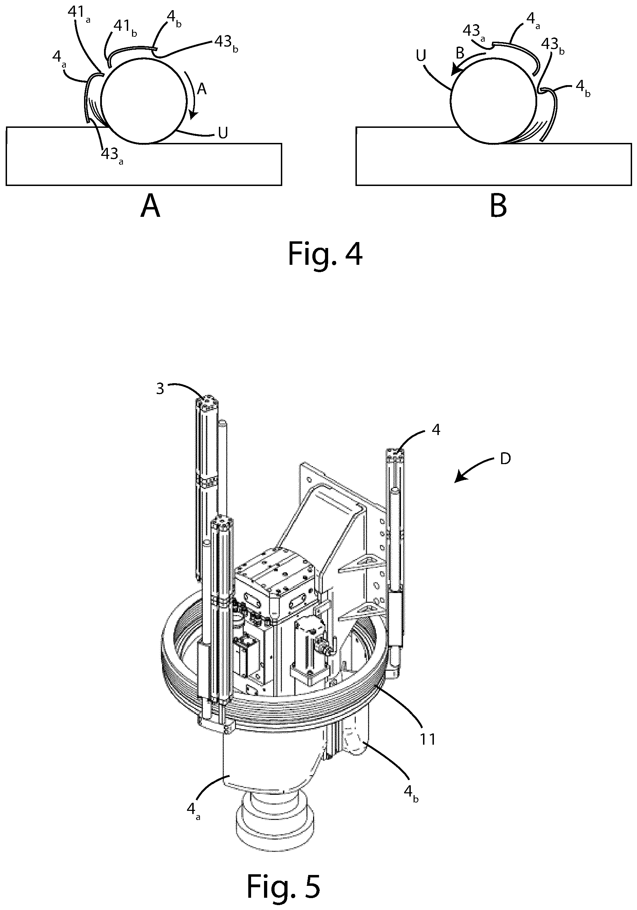

With reference to figures 4A and 4B, in particular, when the tool U rotates according to the first rotation direction A, the chips are ejected along a determined direction, and intercepted by said first deflector 4ₐ.

When the tool U rotates about the second rotation direction B, the chips are ejected along another direction and intercepted by said second deflector 4_{b}.

Said first 2 and second 3 actuators are coupled, at one end, to said circular member 1, and at the other end to the tool holder head.

Said first 2 and second 3 actuators are capable of translating said circular member 1 according to a direction parallel to the Cartesian axis Z of the reference system XYZ, from a lowered position, in which said first 4ₐ and second 4_{b} deflectors surround said tool U, to a raised position, in which said first 4ₐ and second 4_{b} deflectors are raised with respect to said tool U, so as not to hinder the machining operations that do not require to intercept the chips.

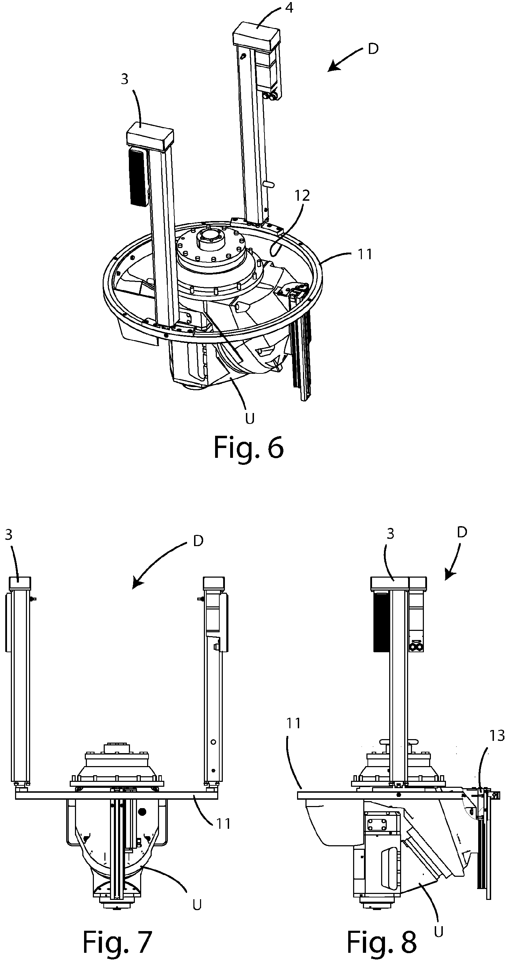

With reference to figures 6-8, said device D can also be coupled to a 5-axis tool holder head.

In this case, said pin 13 is coupled with the rotary actuator of said tool holder head.

Said first 4ₐ and second 4_{b} deflector are separated from each other.

Moreover, in a third embodiment, said first 4ₐ and second 4_{b} deflectors can also move independently from each other.

In this case, said circular member 1 comprises a first and a second portion, and a respective deflector is coupled to each portion.

For example, said first deflector 4ₐ can be coupled to the first portion, and said second deflector 4_{b} can be coupled to said second portion or vice versa.

The operation of the chips shielding device D for a working assembly described above is as follows.

When a tool U performs a machining on a piece, it rotates in a first rotation direction A.

Also, said movable portion 12 of said circular member 1 rotates integrally with said tool U, by means of the coupling between the tool holder head and said pin 13.

During the machining, a quantity of dust and chips are ejected in a certain direction.

Said deflector means 4 is, in turn, positioned according to the machining performed by said tool U, so that said concave inner surface 43ₐ of said first part 4ₐ intercepts the chips coming during the working according to said first rotation direction A, and in such a way that said concave internal surface 43_{b} of said second part 4_{b} intercepts the chips coming during the working, according to said second rotation direction B.

Since said first deflector 4ₐ is positioned with the concavity facing the tool U, the ejected chips are intercepted by the concave internal surface 43ₐ of said first deflector 4ₐ, conveyed towards said ramp curved portion 41ₐ and then towards a suction system, which is not an object of the present invention.

Similarly, when the tool U rotates in the second rotation direction B, a quantity of dust and chips are ejected in another determined direction, different from the previous one.

Since said second deflector 4_{b} is positioned with the concavity facing the tool U, the ejected chips are intercepted by the concave internal surface 43_{b} of said second deflector 4_{b}, conveyed towards said curved portion 41_{b}, and then towards said suction system, which is not an object of the present invention.

When it is not necessary for said first 4ₐ and second 4_{b} deflector to intercept said chips, said first 2 and second 3 actuators cause the translation of said circular member 1 along said axis Z, from said lowered position towards said raised position, so as not to hinder the machining of said tool U, which does not require the suction of the chips.

As is evident from the above description, the chip shielding device object of the present invention allows intercepting the chips ejected by a tool during machining according to any direction of rotation, in a simple and effective way.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Chips shielding device (D) couplable with a tools holder head provided with at least one tool (U) for working wood workpieces and the like, capable of rotating in a first rotation direction (A) and in a second rotation direction (B) opposite to the first one, said device (D) comprising:
at least one circular member (1) capable of surrounding, at least partially, said tool (U), comprising a fixed portion (11) and a mobile portion (12), slidably rotatably coupled with said fixed portion (11),
at least one deflector means (4) coupled with said mobile portion (12),
said device (D) being **characterized**
**in that** said at least one deflector mean (4) comprising a first part (4a), provided with a concave inner surface (43a) facing said tool (U), so as to contact the chips coming from the working of said tool (U) according to said first rotation direction (A) and a second part (4b), provided with a concave inner surface (43b) facing said tool (U), so as to contact the chips coming from the working of said tool (U) according to said second rotation direction (B), and
**in that** said first part is a first deflector mean (4a) and said second part is a second deflector mean (4b), separated from one another.

2. Device (D) according to the preceding claim, **characterized in that** said first part (4a) and second part (4b) are arranged symmetrically to each other with respect to a symmetry plane.

3. Device (D) according to any one of the preceding claims, **characterized**
**in that** said concave inner surface (43a) ends with a curved ramp portion (41a) with respect to the remaining portion,
**in that** said concave inner surface (43b) ends with a curved ramp portion (41b) with respect to the remaining portion, and
**in that** said curved ramp portions (41a; 41b) are arranged back to back.

4. Device (D) according to any one of the preceding claims, **characterized in that** said deflector means (4) is capable of being positioned corresponding to the working carried out by said tool (U), so that said concave inner surface (43a) of said first part (4a) is capable of intercepting the chips produced during the working according to said first rotation direction (A), and so that said concave inner surface (43b) of said second part (4b) is capable of intercepting the chips produced during the working according to said second rotation direction (B).

5. Device (D) according to any one of the preceding claims, **characterized in that** it comprises a first (2) and a second (3) actuator capable of translating said circular member (1) with respect to said tools holder head.

6. Device (D) according to the preceding claim, **characterized**
**in that** said fixed portion (11) and said mobile portion (12) lie on a plane (XY);
**in that** said first (2) and second (3) actuators cause the translation of said circular member (1) along an axis (Z), orthogonal to said plane (XY), from a lowered position with respect to said plane (XY), in which said first (4a) and second (4b) parts are capable of surrounding said tool (U), to a raised position with respect to said plane (XY).

7. Device (D) according to any one of the preceding claims, **characterized in that** said mobile portion (12) can be fixed to said tools holder head by fixing means.

8. Device (D) according to any one of the preceding claims, **characterized in that** said first (4a) and second (4b) parts are coupled with said mobile portion (12) by respective fixing means (44a; 44b).

9. Device (D) according to any one of the preceding claims, **characterized in that** said first (4a) and second (4b) parts are capable of moving independently from each other.

10. Working machine for working wooden workpieces comprising a tool holder head provided with at least one tool (U), **characterized in that** it comprises a chips shielding device (D) couplable with said tools holder head, according to any one of the preceding claims 1-9.

## Patentansprüche

1. Späne-Schutzvorrichtung (D), die mit einem Werkzeughalterkopf koppelbar ist, der mit mindestens einem Werkzeug (U) zum Bearbeiten von Holzwerkstücken und dergleichen versehen ist, das in der Lage ist, in eine erste Drehrichtung (A) und in eine zweite Drehrichtung (B) entgegen der ersten zu drehen, die Vorrichtung (D) umfassend: mindestens ein kreisförmiges Element (1), das in der Lage ist, das Werkzeug (U), umfassend einen festen Abschnitt (11) und einen beweglichen Abschnitt (12), der gleitend und drehbar mit dem festen Abschnitt (11) gekoppelt ist, zumindest teilweise zu umgeben, mindestens eine Ablenkeinrichtung (4), die mit dem beweglichen Abschnitt (12) gekoppelt ist, wobei die Vorrichtung (D) **dadurch gekennzeichnet ist, dass** die mindestens eine Ablenkeinrichtung (4) einen ersten Abschnitt (4a), der mit einer konkaven Innenfläche (43a) versehen ist, die dem Werkzeug (U) zugewandt ist, um die Späne zu berühren, die von der Bearbeitung des Werkzeugs (U) gemäß der ersten Drehrichtung (A) stammen, und einen zweiten Abschnitt (4b), der mit einer konkaven Innenfläche (43b) versehen ist, die dem Werkzeug (U) zugewandt ist, um die Späne zu berühren, die von der Bearbeitung des Werkzeugs (U) gemäß der zweiten Drehrichtung (B) stammen, umfasst, und dadurch, dass der erste Abschnitt eine erste Ablenkeinrichtung (4a) und der zweite Abschnitt eine zweite Ablenkeinrichtung (4b) ist, die voneinander getrennt sind.

2. Vorrichtung (D) nach dem vorherigen Anspruch, **dadurch gekennzeichnet, dass** der erste Abschnitt (4a) und der zweite Abschnitt (4b) symmetrisch zueinander in Bezug auf eine Symmetrieebene angeordnet sind.

3. Vorrichtung (D) nach einem der vorherigen Ansprüche, **dadurch gekennzeichnet, dass** die konkave Innenfläche (43a) mit einem gekrümmten Rampenabschnitt (41a) in Bezug auf den übrigen Abschnitt endet, dass die konkave Innenfläche (43b) mit einem gekrümmten Rampenabschnitt (41b) in Bezug auf den übrigen Abschnitt endet, und dass die gebogenen Rampenabschnitte (41a; 41b) Rücken an Rücken angeordnet sind.

4. Vorrichtung (D) nach einem der vorherigen Ansprüche, **dadurch gekennzeichnet, dass** die Ablenkeinrichtung (4) entsprechend der von dem Werkzeug (U) durchgeführten Bearbeitung positioniert werden kann, sodass die konkave Innenfläche (43a) des ersten Abschnitts (4a) die während der Bearbeitung in der ersten Drehrichtung (A) erzeugten Späne abfangen kann, und dass die konkave Innenfläche (43b) des zweiten Abschnitts (4b) die während der Bearbeitung in der zweiten Drehrichtung (B) erzeugten Späne abfangen kann.

5. Vorrichtung (D) nach einem der vorherigen Ansprüche, **dadurch gekennzeichnet, dass** sie einen ersten (2) und einen zweiten (3) Aktuator umfasst, die in der Lage sind, das kreisförmige Element (1) in Bezug auf den Werkzeughalterkopf zu verschieben.

6. Vorrichtung (D) nach dem vorherigen Anspruch, **dadurch gekennzeichnet dass** der feste Abschnitt (11) und der bewegliche Abschnitt (12) in einer Ebene (XY) liegen; dass der erste (2) und der zweite (3) Aktuator die Verschiebung des kreisförmigen Elements (1) entlang einer Achse (Z), die orthogonal zu der Ebene (XY) ist, aus einer abgesenkten Position in Bezug auf die Ebene (XY), in der der erste (4a) und der zweite (4b) Abschnitt das Werkzeug (U) umgeben können, in eine angehobene Position in Bezug auf die Ebene (XY) bewirken.

7. Vorrichtung (D) nach einem der vorherigen Ansprüche, **dadurch gekennzeichnet, dass** der bewegliche Abschnitt (12) an dem Werkzeughalterkopf durch Befestigungseinrichtungen befestigt werden kann.

8. Vorrichtung (D) nach einem der vorherigen Ansprüche, **dadurch gekennzeichnet, dass** der erste (4a) und der zweite (4b) Abschnitt durch entsprechende Befestigungsmittel (44a; 44b) mit dem beweglichen Abschnitt (12) gekoppelt sind.

9. Vorrichtung (D) nach einem der vorherigen Ansprüche, **dadurch gekennzeichnet, dass** der erste (4a) und der zweite (4b) Abschnitt unabhängig voneinander beweglich sind.

10. Bearbeitungsmaschine zum Bearbeiten von Holzwerkstücken mit einem Werkzeughalterkopf, der mit mindestens einem Werkzeug (U) versehen ist, **dadurch gekennzeichnet, dass** sie eine mit dem Werkzeughalterkopf koppelbare Späne-Schutzvorrichtung (D) nach einem der vorherigen Ansprüche 1-9 aufweist.

## Revendications

1. Dispositif de protection contre les copeaux (D) couplé à une tête porte-outils munie d'au moins un outil (U) pour le travail des pièces en bois et similaires, pouvant tourner dans un premier sens de rotation (A) et dans un deuxième sens de rotation (B) opposé au premier, ledit dispositif (D) comprenant: au moins un élément circulaire (1) capable d'entourer, au moins partiellement, ledit outil (U), comprenant une partie fixe (11) et une partie mobile (12), couplée de manière coulissante et rotative avec ladite partie fixe (11), au moins un moyen déflecteur (4) couplé à ladite partie mobile (12), ledit dispositif (D) est **caractérisé en ce que** ledit au moins un moyen déflecteur (4) comprend une première partie (4a), pourvue d'une surface intérieure concave (43a) en regard dudit outil (U), de manière à entrer en contact avec les copeaux provenant du travail dudit outil (U) selon ledit premier sens de rotation (A) et une deuxième partie (4b), pourvue d'une surface intérieure concave (43b) en regard dudit outil (U), de manière à entrer en contact avec les copeaux provenant du travail dudit outil (U) selon ledit deuxième sens de rotation (B), et **en ce que** ladite première partie est un premier moyen déflecteur (4a) et ladite deuxième partie est un deuxième moyen déflecteur (4b), séparés l'un de l'autre.

2. Dispositif (D) selon la revendication précédente, **caractérisé en ce que** ladite première partie (4a) et ladite deuxième partie (4b) sont disposées symétriquement l'une par rapport à l'autre par rapport à un plan de symétrie.

3. Dispositif (D) selon l'une quelconque des revendications précédentes, **caractérisé en ce que** ladite surface intérieure concave (43a) se termine par une portion de rampe courbe (41a) par rapport à la portion restante, **en ce que** ladite surface intérieure concave (43b) se termine par une portion de rampe courbe (41b) par rapport à la portion restante, et **en ce que** lesdites portions de rampe courbe (41a; 41b) sont disposées dos à dos.

4. Dispositif (D) selon l'une quelconque des revendications précédentes, **caractérisé en ce que** ledit moyen déflecteur (4) est susceptible d'être positionné en fonction du travail effectué par ledit outil (U), de sorte que ladite surface intérieure concave (43a) de ladite première partie (4a) soit susceptible d'intercepter les copeaux produits lors du travail selon ledit premier sens de rotation (A), et de sorte que ladite surface intérieure concave (43b) de ladite deuxième partie (4b) soit susceptible d'intercepter les copeaux produits lors du travail selon ledit deuxième sens de rotation (B).

5. Dispositif (D) selon l'une quelconque des revendications précédentes, **caractérisé en ce qu'**il comprend un premier (2) et un deuxième (3) actionneur capable de translater ledit élément circulaire (1) par rapport à ladite tête porte-outils.

6. Dispositif (D) selon la revendication précédente, **caractérisé en ce que** ladite partie fixe (11) et ladite partie mobile (12) reposent sur un plan (XY); **en ce que** lesdits premier (2) et deuxième (3) actionneurs provoquent la translation dudit élément circulaire (1) selon un axe (Z), orthogonal audit plan (XY), d'une position abaissée par rapport audit plan (XY), dans laquelle lesdites première (4a) et deuxième (4b) parties sont aptes à entourer ledit outil (U), à une position relevée par rapport audit plan (XY).

7. Dispositif (D) selon l'une quelconque des revendications précédentes, **caractérisé en ce que** ladite partie mobile (12) peut être fixée à ladite tête porte-outils par des moyens de fixation.

8. Dispositif (D) selon l'une quelconque des revendications précédentes, **caractérisé en ce que** lesdites première (4a) et deuxième (4b) parties sont couplées à ladite partie mobile (12) par des moyens de fixation respectifs (44a; 44b).

9. Dispositif (D) selon l'une quelconque des revendications précédentes, **caractérisé en ce que** lesdites première (4a) et deuxième (4b) parties sont susceptibles de se déplacer indépendamment l'une de l'autre.

10. Machine d'usinage de pièces en bois comprenant une tête porte-outil munie d'au moins un outil (U), **caractérisée en ce qu'**elle comprend un dispositif de protection contre les copeaux (D) pouvant être couplé avec ladite tête porte-outil, selon l'une quelconque des revendications 1 à 9 précédentes.
